# FASCICULE DE BREVET EUROPEEN

(11) **EP 1 162 098 B1**
(45) Date de publication et mention de la délivrance du brevet: **02.02.2005**
(21) Numéro de dépôt: 01401254.6
(22) Date de dépôt: 15.05.2001
(51) Int. Cl.: B60K 13/04, F01N 7/08, B60K 11/04, B60K 11/08

(54) **Véhicule automobile à moteur thermique comportant une ligne d'échappement ayant un système de dépollution placé à l'avant du moteur**
Kraftfahrzeug mit Verbrennungsmotor mit Abgasstrang und vor dem Motor angeordnetem Reinigungssystem
Motor vehicle with internal combustion engine with exhaust gas line and depollution system arranged in front of the engine

(30) Priorité: 08.06.2000 FR 0007363
(43) Date de publication de la demande: 12.12.2001
(73) Titulaire: Peugeot Citroen Automobiles SA, 92200 Neuilly sur Seine (FR)
(72) Inventeur: Noirot, Rémi, 92800 Puteaux (FR)
(74) Mandataire: Bouget, Lucien

(56) Documents cités:
- EP-A- 0 807 749
- DE-A- 19 734 498
- DE-C- 19 634 367
- FR-A- 2 375 816
- US-A- 4 887 427
- US-A- 4 891 940
- US-A- 5 239 826
- US-A- 5 398 504

## Description

L'invention concerne un véhicule automobile à moteur thermique comprenant un compartiment moteur dans une partie avant du véhicule et une ligne d'échappement de gaz de combustion du moteur comportant un système de dépollution.

Les véhicules automobiles de conception récente comporte généralement une ou plusieurs lignes d'échappement constituées d'un conduit sur lequel sont intercalés des dispositifs de dépollution et un ou plusieurs dispositifs d'amortissement acoustique tels que des silencieux.

Il peut être difficile de loger l'ensemble des éléments de la ligne d'échappement sous le plancher du véhicule automobile.

Il est généralement nécessaire de prévoir un tunnel pour le passage de la ligne d'échappement et le logement des dispositifs anti-pollution et des silencieux, s'étendant suivant la direction longitudinale du véhicule automobile. Le tunnel est généralement en saillie au-dessus du plancher du véhicule à l'intérieur de l'habitacle, ce qui présente des inconvénients, en ce qui concerne le confort et l'agencement de l'habitacle, un plancher parfaitement plat restant une solution idéale qu'il n'est généralement pas possible d'obtenir.

En outre, les dispositifs de dépollution peuvent nécessiter un maintien en température pour fonctionner de manière satisfaisante, de sorte qu'il peut être défavorable de placer ces dispositifs de dépollution dans des zones du véhicule exposées sans protection aux conditions de l'environnement extérieur au véhicule.

Dans le cas des véhicules automobiles comprenant un compartiment moteur dans une partie avant du véhicule dans lequel le moteur thermique de propulsion du véhicule est placé, généralement dans une direction transversale, on dispose d'un espace libre de dimensions plus ou moins importantes entre la partie du moteur thermique dirigée vers l'avant et la partie antérieure du compartiment moteur dans laquelle est généralement placé l'ensemble des moyens de refroidissement du moteur comportant le ou les radiateurs.

Dans le document US-5,239,826, qui correspond au préambule de la revendication 1, on propose un dispositif d'échappement pour un moteur de véhicule automobile comprenant un premier convertisseur catalytique de faible capacité et un second convertisseur catalytique de plus forte capacité placés sur les tubulures d'échappement du moteur, à l'avant et à l'arrière du moteur ainsi qu'un pot catalytique de plus forte capacité que les premier et deuxième convertisseurs, placé sur la ligne d'échappement sous le véhicule automobile. Ce dispositif permet en particulier d'améliorer l'élimination des polluants des gaz d'échappement, lorsque le moteur est froid.

Le but de l'invention est donc de proposer un véhicule automobile comprenant un compartiment moteur dans une partie avant du véhicule, un moteur thermique disposé à l'intérieur du compartiment moteur, une ligne d'échappement de gaz de combustion et des tubulures d'échappement assurant la liaison entre la sortie d'au moins un cylindre du moteur thermique et la ligne d'échappement qui comporte au moins un conduit d'échappement et au moins deux dispositifs de dépollution d'un système de dépollution intercalés sur le conduit d'échappement, ce véhicule automobile pouvant être réalisé avec le plancher de son habitacle parfaitement plat et une protection mieux assurée des organes sensibles de la ligne d'échappement.

Dans ce but, les dispositifs de dépollution du système de dépollution de la ligne d'échappement sont placés dans le compartiment moteur, à l'avant du moteur thermique et le conduit d'échappement sur lequel est placé le système de dépollution à l'intérieur du compartiment moteur comporte une partie à l'aval du système de dépollution placée dans une direction longitudinale du véhicule automobile, dans une position latérale, en dessous du plancher de l'habitacle du véhicule automobile réalisé sous forme totalement plate.

Afin de bien faire comprendre l'invention, on va maintenant décrire, à titre d'exemple, en se référant aux figures jointes en annexe, plusieurs modes de réalisation d'un véhicule automobile suivant l'invention comparativement à un véhicule automobile suivant l'art antérieur.
La figure 1 est une vue de dessus d'un véhicule automobile suivant l'art antérieur.
Les figures 2 et 3 sont des vues de dessus analogues à la vue de la figure 1 de véhicules automobiles suivant l'invention et suivant deux variantes de réalisation.
La figure 4 est une vue de dessus du compartiment moteur d'un véhicule automobile suivant l'invention et suivant la première variante de réalisation.
La figure 5 est une vue de face suivant 5 de la figure 4.
Les figures 6A, 6B, 6C et 6D sont des vues de face analogues à la vue de la figure 5 relatives à des véhicules automobiles à moteur en L suivant l'invention et suivant quatre variantes de réalisation.
Les figures 7A, 7B, 7C et 7D sont des vues de dessus du moteur et d'une partie de la ligne d'échappement d'un véhicule automobile à moteur en V suivant l'invention et suivant quatre variantes de réalisation.
La figure 8 est une vue de dessus du compartiment moteur d'un véhicule automobile suivant l'art antérieur.
La figure 9 est une vue de dessus d'un véhicule automobile suivant l'invention à radiateurs latéraux.
La figure 10 est une vue de dessus du compartiment moteur d'un véhicule automobile suivant l'invention à radiateurs latéraux et circulation d'air améliorée par l'intermédiaire de freins à disques.
La figure 11 est une vue en coupe suivant 11-11 de la figure 10 montrant une turbine de circulation d'air associée à un frein à disques du véhicule automobile.
La figure 12 est une vue de dessus du compartiment moteur d'un véhicule automobile suivant l'invention à radiateurs latéraux et circulation d'air améliorée par l'intermédiaire des roues du véhicule.
La figure 13 est une vue en coupe suivant 13-13 de la figure 12 d'une roue du véhicule automobile constituant une turbine de circulation d'air.
Les figures 14 et 15 sont des vues, respectivement de dessus et en élévation latérale, du moteur thermique d'un véhicule automobile suivant l'art antérieur.
Les figures 16 et 17 sont des vues, respectivement de dessus et en élévation latérale, du moteur thermique d'un véhicule automobile suivant l'invention.

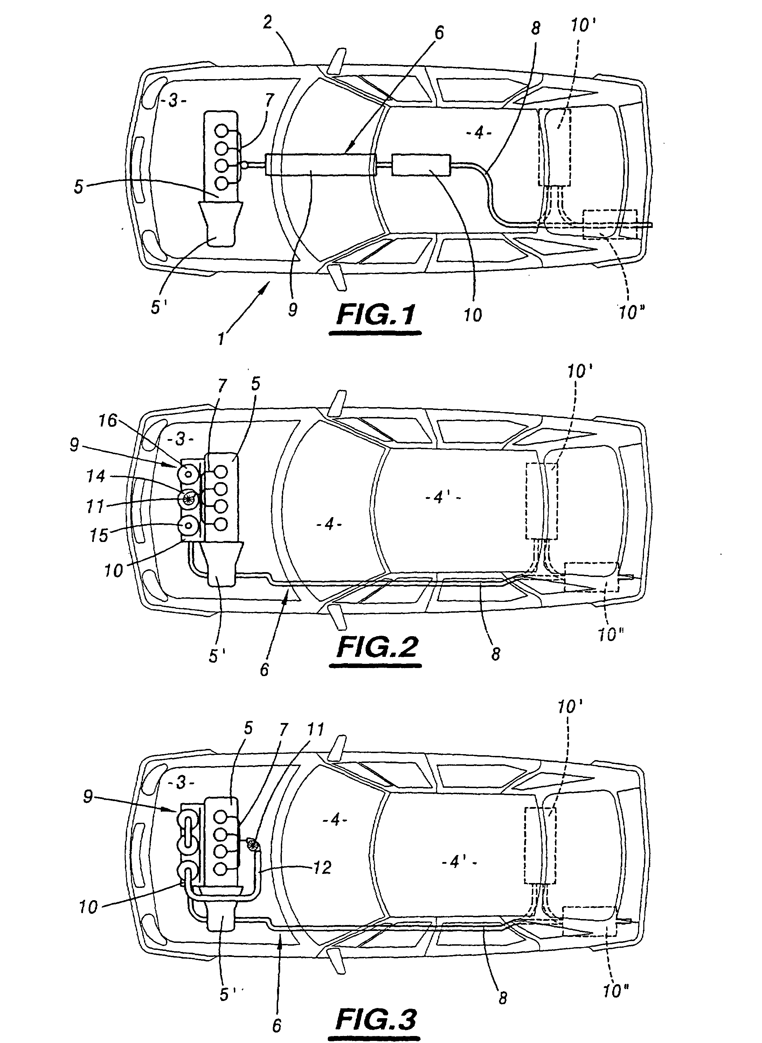

Sur la figure 1, on a représenté un véhicule automobile 1 de type classique comportant une carrosserie 2 à l'intérieur de laquelle sont délimités un compartiment moteur 3 à l'avant du véhicule automobile et un habitacle 4.

Le moteur thermique 5 du véhicule automobile de type en L et comportant quatre cylindres est associé à une boîte de vitesses 5' et disposé transversalement dans le compartiment moteur 3. Le moteur thermique 5 comporte un ensemble 7 de tubulures d'échappement reliées à chacun des cylindres du moteur au niveau d'une culasse et à une ligne d'échappement 6 disposée généralement suivant la direction longitudinale du véhicule 1 et comportant un conduit d'échappement 8 sur lequel sont disposés successivement un système de dépollution 9, un premier silencieux 10 à la sortie du système de dépollution 9 et des moyens d'amortissement 10' et 10" comportant, par exemple, un second silencieux placé sur la ligne d'échappement, à l'arrière du véhicule automobile 1.

Le système de dépollution 9 peut comporter différents éléments successifs tels qu'un catalyseur d'oxydation, un filtre à particules ou un catalyseur de type piège à oxyde d'azote (désigné comme piège à NOx). Ces organes de dépollution peuvent être positionnés les uns devant les autres de différentes façons selon les besoins spécifiques de dépollution établis par le constructeur automobile.

Le moteur thermique 5 peut être un moteur à essence ou un moteur Diesel, le système de dépollution pouvant être différent dans un cas et dans l'autre.

Dans le cas d'un véhicule automobile selon l'art antérieur tel que le véhicule 1, il est généralement nécessaire de prévoir un tunnel en saillie par rapport au plancher du véhicule traversant longitudinalement l'habitacle 4 pour loger la ligne d'échappement 6.

Sur les figures 2 et 3, on a représenté un véhicule automobile suivant l'invention ; les parties ou composants correspondants du véhicule suivant l'invention et du véhicule suivant l'art antérieur représenté sur la figure 1 sont désignés par les mêmes repères. La différence entre le véhicule suivant l'invention représenté sur les figures 2 et 3 et le véhicule suivant l'art antérieur représenté sur la figure 1 est relative à la ligne d'échappement 6.

Dans le cas des véhicules suivant l'invention, le système de dépollution 9 et le premier silencieux 10 de la ligne d'échappement 6 sont disposés dans le compartiment moteur 3, à l'avant du moteur 5, seul le second silencieux 10" et le pot 10' étant disposés sous le plancher de l'habitacle 4 du véhicule automobile, à l'arrière du véhicule, dans une disposition identique à celle de la ligne d'échappement 6 du véhicule automobile suivant l'art antérieur. Le premier silencieux 10, de forme générale cylindrique, est placé transversalement avec son axe dans une direction horizontale.

De ce fait, aucun dispositif de dépollution et aucun silencieux n'est intercalé sur la partie aval du conduit d'échappement 8 reliant le premier silencieux 10 au pot d'échappement 10'. Cette partie du conduit, dont le diamètre est limité, peut être placée sous le plancher du véhicule automobile, dans une disposition latérale, comme représenté sur les figures 2 et 3.

On peut ainsi éviter l'utilisation d'un tunnel en saillie par rapport au plancher de l'habitacle 4 du véhicule automobile. De ce fait, le plancher 4' de l'habitacle 4 est totalement plat, ce qui augmente le confort et les possibilités d'agencement de l'habitacle.

Dans le cas du mode de réalisation représenté sur la figure 2, les tubulures d'échappement 7 reliant chacun des cylindres en ligne du moteur 5 en L au système de dépollution 9 sont dirigées vers l'avant du moteur, de sorte qu'on peut relier directement le collecteur de sortie des tubulures au système de dépollution, de préférence par l'intermédiaire de la turbine d'un turbocompresseur 11 du véhicule automobile représentée sur la figure 2.

Dans le cas du mode de réalisation de la figure 3, les tubulures d'échappement 7 sont dirigées vers l'arrière du moteur 5 et le système de dépollution 9 est relié au collecteur de sortie des tubulures d'échappement par l'intermédiaire d'un conduit 12 de contournement du moteur, passant par exemple au-dessus du moteur 5 ou de la boîte de vitesses 5'. Les tubulures d'échappement 7 du moteur peuvent être reliées au conduit 12 de liaison au système de dépollution 9, par l'intermédiaire de la turbine du turbocompresseur 11 du moteur entraînée par les gaz d'échappement et représentée sur la figure 3.

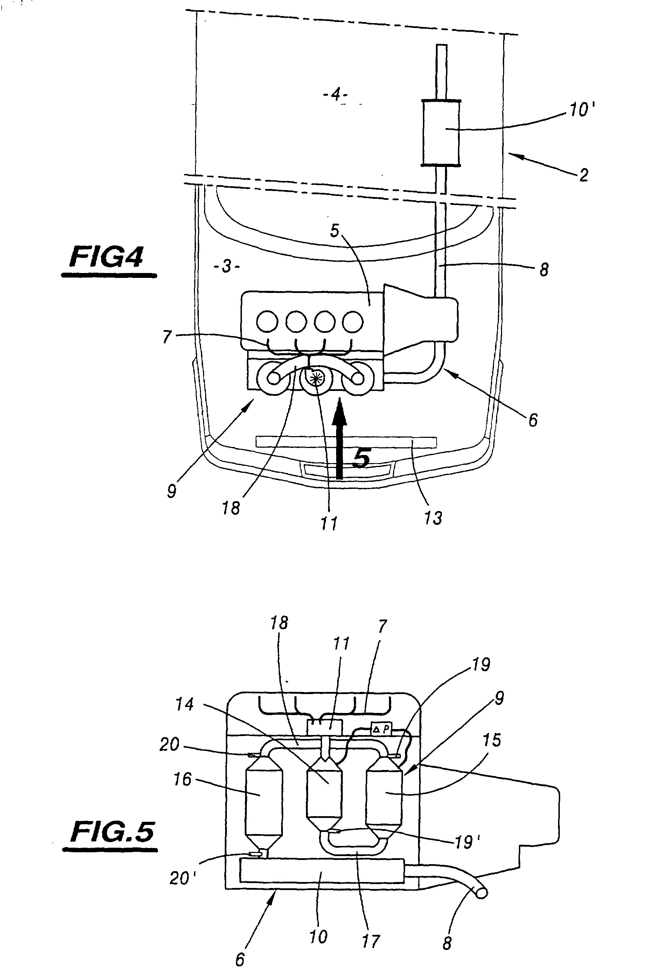

Sur les figures 4 et 5, on a représenté plus en détail le système de dépollution 9 disposé à l'avant du moteur 5, dans le compartiment moteur 3, dans un espace libre situé entre le radiateur 13 du véhicule automobile et une face antérieure du moteur 5.

Le moteur 5, représenté sur les figures 4 et 5, est un moteur en L dont les tubulures d'échappement 7 reliant chacun des cylindres en ligne du moteur au système de dépollution 9 sont dirigées vers l'avant à partir du moteur 5.

Les tubulures 7 sont reliées au système de dépollution 9 par l'intermédiaire de la turbine du turbocompresseur 11 entraînée par les gaz d'échappement et représentée sur la figure 4.

Le système de dépollution 9 comporte successivement, depuis la turbine du turbocompresseur 11 jusqu'au premier silencieux 10, à la sortie du système de dépollution, un catalyseur de pré-oxydation 14, un filtre à particules 15 et un piège à NOx 16.

Le catalyseur de pré-oxydation 14 permet en particulier d'éliminer ou de réduire le monoxyde de carbone CO et les hydrocarbures imbrûlés dans les gaz d'échappement.

Le filtre à particules 15 assure l'arrêt des particules solides contenues dans les gaz d'échappement et réalise la combustion d'une partie de ces particules, en particulier la fraction des particules constituée par des produits carbonés.

Le piège à NOx 16 permet d'éliminer ou de réduire les proportions d'oxydes d'azote NOx dans les gaz d'échappement.

Les dispositifs de dépollution 14, 15 et 16, de forme générale cylindrique, sont disposés de telle sorte qu'ils soient parcourus par les gaz d'échappement dans leur direction axiale verticale.

Le catalyseur d'oxydation 14 est relié directement à la sortie de la turbine du turbocompresseur 11 par son extrémité supérieure d'entrée. La partie inférieure de sortie du catalyseur d'oxydation 14 est reliée à la partie inférieure d'entrée du filtre à particules 15 par l'intermédiaire d'une conduite 17 disposée à la partie basse du système de dépollution et la partie supérieure de sortie du filtre à particules est reliée à la partie supérieure d'entrée du piège à NOx 16, par une conduite 18 disposée à la partie supérieure du système de dépollution 9. La partie inférieure de sortie du piège à NOx 16 est reliée directement au premier silencieux 10. Les conduits 17 et 18 constituent des tronçons du conduit d'échappement 8 entre lesquels sont intercalés les dispositifs de dépollution 14, 15 et 16.

La partie du conduit d'échappement 8, située en aval du premier silencieux 10, peut être placée facilement, dans une direction longitudinale, sous une partie latérale du plancher du véhicule automobile, de sorte qu'un tunnel en saillie par rapport au plancher de l'habitacle n'est pas nécessaire.

Sur la partie d'extrémité postérieure du conduit d'échappement 8, c'est-à-dire dans la partie du conduit d'échappement située en-dessous de la partie arrière du véhicule automobile, peut être placé un silencieux tel que 10' qui peut être facilement logé sous le plancher, par exemple en-dessous du coffre arrière du véhicule.

Des détecteurs de température tels que des thermocouples 19 et 19' peuvent être placés à la sortie du catalyseur d'oxydation 14 et à la sortie du filtre à particules 15. Des détecteurs 20 et 20' tels qu'une sonde lambda ou un détecteur de NOx peuvent être placés à l'entrée et à la sortie du piège à NOx 16.

Ces détecteurs permettent de contrôler et piloter les dispositifs de dépollution. De plus, on peut mesurer la perte de charge ΔP entre l'entrée du catalyseur d'oxydation 14 et la sortie du filtre à particules 15.

Les principaux avantages obtenus dans le cas du véhicule suivant l'invention comportant une ligne d'échappement 6 dont les dispositifs de dépollution et le premier silencieux sont placés dans le compartiment moteur 3, à l'avant du moteur 5, sont de faciliter le logement de la ligne d'échappement sous le plancher du véhicule automobile, de telle sorte que le plancher de l'habitacle 4 peut être entièrement plat et de protéger les dispositifs de dépollution, en particulier contre des déperditions thermiques.

En effet, les dispositifs de dépollution 14, 15 et 16 qui sont placés à proximité du moteur, à l'intérieur du compartiment moteur 3, subissent des échanges thermiques avec l'atmosphère extérieure au véhicule 1 beaucoup plus faibles que des dispositifs placés sous le plancher du véhicule. En outre, en cas de choc frontal du véhicule automobile, les dispositifs de dépollution et le silencieux 10 disposé horizontalement en-dessous des dispositifs de dépollution assurent une certaine protection et un certain amortissement du choc, du fait que de l'énergie est absorbée, lors de l'écrasement de ces dispositifs.

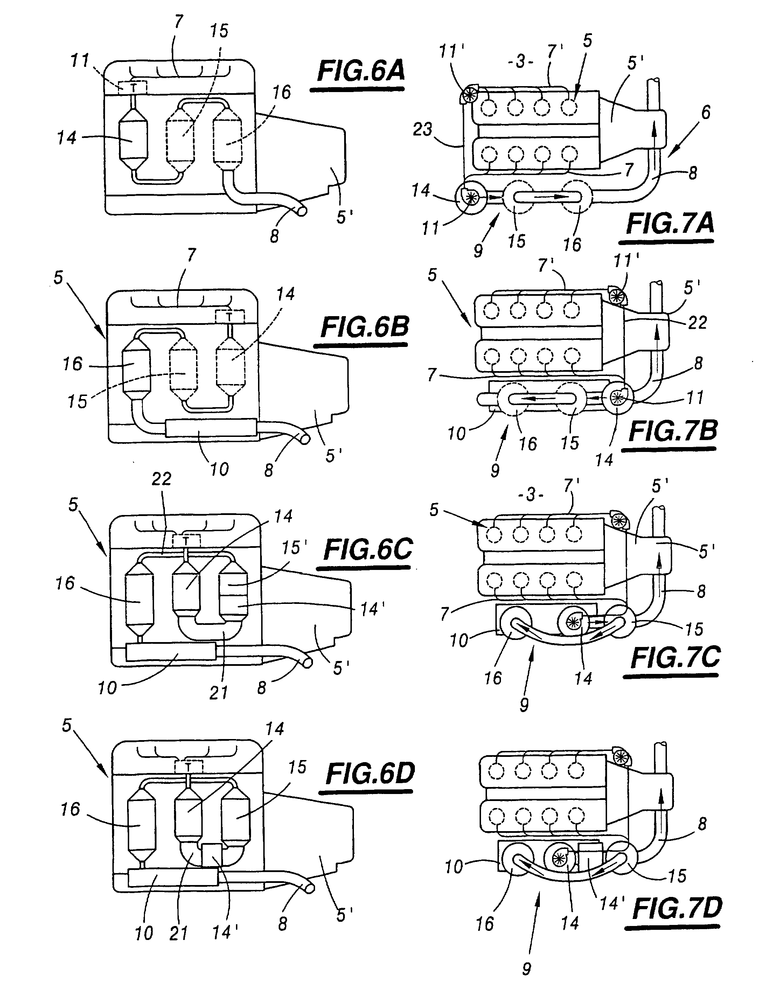

Sur les figures 6A à 6D, on a représenté différentes dispositions des composants de la ligne d'échappement à l'intérieur du compartiment moteur d'un véhicule automobile comportant un moteur en L placé transversalement à la partie avant du véhicule automobile.

Les éléments correspondants sur les figures 4 et 5 d'une part et les figures 6A à 6D d'autre part sont désignés par les mêmes repères.

Dans le cas du mode de réalisation représenté sur la figure 6A, le catalyseur d'oxydation 14, le filtre à particules 15 et le piège à NOx 16 disposés de manière à être traversés par les gaz d'échappement dans la direction verticale sont en série et reliés par une conduite inférieure et une conduite supérieure, de manière que le catalyseur d'oxydation 14 et le piège à NOx 16 soient traversés par les gaz d'échappement circulant de haut en bas et le filtre à particules par les gaz d'échappement circulant de bas en haut.

Le conduit d'échappement 8 est dirigé vers l'arrière du véhicule automobile, dans la direction longitudinale, un ou plusieurs silencieux ou pots d'échappement étant placés sur ce conduit 8.

Les dispositifs de dépollution successifs 14, 15, 16 du système de dépollution 9 sont disposés successivement suivant la direction transversale du compartiment moteur du véhicule automobile, de la gauche vers la droite en regardant vers l'arrière du véhicule. Le catalyseur d'oxydation 14 constituant le premier dispositif de dépollution en série est relié à la sortie de la turbine du turbocompresseur 11.

La variante de réalisation de la figure 6B est pratiquement identique au mode de réalisation de la figure 6A, les dispositifs de dépollution successifs 14, 15 et 16 en série étant toutefois placés l'un à la suite de l'autre dans la direction transversale du compartiment moteur du véhicule automobile de la droite vers la gauche en regardant vers l'arrière du véhicule automobile. De plus, le premier silencieux 10, de forme générale cylindrique, est disposé avec son axe horizontal à l'intérieur du compartiment moteur, dans une disposition transversale, de manière à être relié par sa partie de sortie à la partie aval du conduit d'échappement 8 disposée suivant la longueur du véhicule automobile et dans une partie latérale du plancher.

Dans le cas du mode de réalisation représenté sur la figure 6C, le catalyseur d'oxydation 14 est disposé verticalement dans la partie centrale du compartiment moteur entre le filtre à particules 16 disposé sur sa gauche et un ensemble de dispositifs 14', 15' constitués par un second catalyseur de pré-oxydation 14' placé en série par rapport au premier catalyseur de pré-oxydation 14 par l'intermédiaire d'une conduite à grande section 21 et d'un filtre à particules 15', le second catalyseur de pré-oxydation 14' et le filtre à particules 15' étant superposés dans la direction verticale sous la forme d'un dispositif unitaire relié en série à l'entrée du piège à NOx par une conduite supérieure 22, la conduite à grande section 21 reliant le premier et le second catalyseurs d'oxydation étant placée à la partie inférieure du système de dépollution.

De plus, la partie de sortie du piège à NOx 16 est reliée directement à un premier silencieux 10 placé transversalement dans le compartiment moteur du véhicule automobile et relié au conduit d'échappement 8 dont le parcours de direction générale longitudinale est situé sous une partie latérale du plancher du véhicule automobile.

Dans le cas de la variante de réalisation représentée sur la figure 6D, la disposition est pratiquement identique à la disposition représentée sur la figure 6C. Toutefois, le précatalyseur d'oxydation 14' placé en amont du filtre à particules 15 est intercalé sur la conduite 21 de grande section reliant la sortie du catalyseur d'oxydation 14 au filtre à particules 15.

Le dispositif suivant l'invention peut donc être mis en oeuvre avec un filtre à particules comportant un précatalyseur d'oxydation associé ou avec un filtre à particules dont la partie d'entrée est reliée au catalyseur de pré-oxydation.

Sur les figures 7A, 7B, 7C et 7D, on a représenté en vue de dessus le compartiment moteur d'un véhicule automobile suivant l'invention comportant un moteur 5 en V dont les deux lignes de cylindres inclinés sont disposées transversalement dans le compartiment moteur 3 à l'avant du véhicule automobile.

Les cylindres de chacune des lignes de cylindres du moteur 5 en V sont reliés par des tubulures respectives 7 et 7' à la ligne d'échappement.

Les tubulures 7 et 7' sont dirigées respectivement vers l'avant et vers l'arrière du compartiment moteur 3 du véhicule automobile.

Selon l'invention, les composants du système de dépollution 9 et éventuellement un premier silencieux 10 de la ligne d'échappement sont placés dans le compartiment moteur, à l'avant du moteur 5 en V.

Les tubulures 7 et 7' des lignes de cylindres du moteur en V sont reliées à la ligne d'échappement 6, respectivement par l'intermédiaire de la turbine d'un premier turbocompresseur 11 et par la turbine d'un second turbocompresseur 11'.

Dans le cas du premier mode de réalisation représenté sur la figure 7A, le catalyseur de pré-oxydation 14, le filtre à particules 15 et le piège à NOx 16 sont disposés verticalement, de manière successive dans la direction transversale du compartiment moteur 3 du véhicule automobile et de gauche à droite en regardant vers l'arrière du véhicule automobile, l'ensemble du système de dépollution 9 étant placé dans le compartiment moteur 3, à l'avant du moteur 5.

Les tubulures 7 et 7' des deux lignes de cylindres du moteur 5 en V sont reliées à l'entrée du catalyseur de pré-oxydation 14, par l'intermédiaire de la turbine du turbocompresseur 11.

Les tubulures 7' de la seconde ligne de cylindres du moteur 5 sont reliées à l'entrée du catalyseur de pré-oxydation 14, par l'intermédiaire de la turbine du turbocompresseur 11' et de la turbine du turbocompresseur 11 placées en série par l'intermédiaire d'une conduite 23.

La sortie du piège à NOx 16 est reliée à la partie aval du conduit d'échappement 8 disposé dans la direction longitudinale du véhicule automobile, dans une disposition latérale.

Dans le cas du second mode de réalisation représenté sur la figure 7B, le catalyseur de pré-oxydation 14, le filtre à particules 15 et le piège à NOx 16 sont disposés verticalement, l'un à la suite de l'autre, dans cet ordre, dans la direction transversale du compartiment moteur 3 du véhicule automobile, de la droite vers la gauche et le premier silencieux 10 est placé dans une disposition horizontale, en-dessous du système de dépollution 9, dans la direction transversale du compartiment moteur, de sorte que le conduit d'échappement 8 relié à la sortie du silencieux 10 puisse être placé latéralement et dans une direction longitudinale, ce conduit comportant une partie coudée dans le compartiment moteur et passant en-dessous de la boîte de vitesse 5'.

La partie inférieure de sortie du catalyseur de pré-oxydation 14 est reliée à la partie inférieure d'entrée du filtre à particules, par l'intermédiaire d'une conduite inférieure et la sortie du filtre à particules 15 est reliée à l'entrée supérieure du piège à NOx par une conduite de liaison supérieure.

Les tubulures d'échappement 7 de la première ligne de cylindres du moteur 5 sont reliées à l'entrée du catalyseur de pré-oxydation 14, par l'intermédiaire de la turbine d'un premier turbocompresseur 11 de la première ligne de cylindres et les tubulures d'échappement 7' de la seconde ligne de cylindres du moteur 5 sont reliées à l'entrée du catalyseur de pré-oxydation 14 par l'intermédiaire de la turbine d'un second turbocompresseur 11' de la seconde ligne de cylindres et d'une conduite 22 passant au-dessus de la boîte de vitesses 5'.

Dans le cas du mode de réalisation représenté sur la figure 7C, les dispositifs de dépollution du système de dépollution 9 sont disposés verticalement dans le compartiment moteur à l'avant du moteur 5, le catalyseur de pré-oxydation 14 étant intercalé entre le filtre à particules 15 disposé sur sa droite en regardant vers l'arrière du véhicule automobile et le piège à NOx 16 disposé sur sa gauche et relié, à sa partie inférieure de sortie, au premier silencieux 10 placé horizontalement en-dessous du système de dépollution 9, dans la direction transversale du compartiment moteur 3.

La partie inférieure de sortie du catalyseur de pré-oxydation 14 est reliée à la partie inférieure d'entrée du filtre à particules 15 par une conduite inférieure et la partie supérieure de sortie du filtre à particules 15 est reliée à la partie supérieure d'entrée du piège à NOx 16 par une conduite supérieure, la sortie du premier silencieux 10 étant reliée à la ligne d'échappement 8 qui comporte un coude, de manière à être dirigée suivant la direction longitudinale du véhicule automobile, dans une partie latérale en passant sous la boîte de vitesses 5' du moteur 5.

Les lignes de cylindres du moteur 5 sont reliées comme précédemment par les tubulures d'échappement 7 et 7', à la partie d'entrée du catalyseur de pré-oxydation, par l'intermédiaire des turbines des turbocompresseurs 11 et 11' des deux lignes de cylindres et d'une conduite de liaison entre les turbines des deux turbocompresseurs.

Dans le cas du mode de réalisation représenté sur la figure 7D, les dispositifs de dépollution 14, 15 et 16 sont placés dans une disposition analogue au cas du mode de réalisation de la figure 7C. De plus, un second catalyseur de pré-oxydation 14' est intercalé entre la sortie du premier catalyseur de pré-oxydation 14 et l'entrée du filtre à particules 15, en étant relié à ces deux dispositifs par l'intermédiaire d'une conduite de grande section.

Dans le cas de tous les modes de réalisation décrits, les dispositifs de dépollution de forme générale cylindrique ont été représentés dans une disposition verticale. En revanche, le premier silencieux, lorsqu'il est disposé dans le compartiment moteur, à l'avant du moteur est généralement placé horizontalement. Cependant, il est possible d'envisager d'autres dispositions des composants du système de dépollution et du premier silencieux, dans le compartiment moteur, à l'avant du moteur.

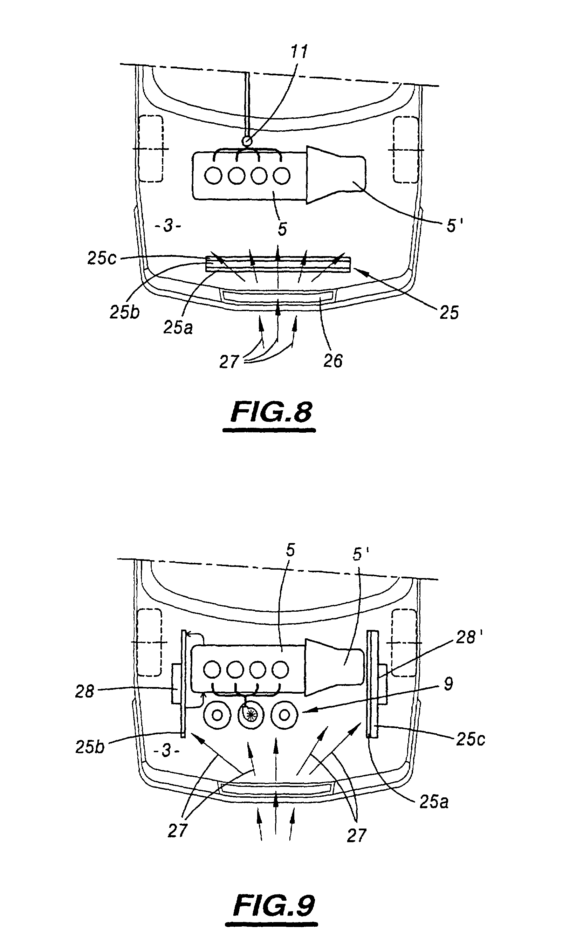

Sur la figure 8, on a représenté le compartiment moteur d'un véhicule automobile suivant l'art antérieur.

A l'avant du compartiment moteur est placé un échangeur de chaleur 25 tel qu'un radiateur assurant plusieurs fonctions.

Le radiateur 25 comporte trois parties juxtaposées dans le sens allant de l'avant vers l'arrière du véhicule automobile.

Une première partie 25a de l'échangeur de chaleur assure un échange de chaleur entre l'air compressé par le turbocompresseur 11 du moteur et de l'air de refroidissement pénétrant dans le compartiment moteur à travers la calandre 26, comme représenté par les flèches 27. Une seconde partie 25b de l'échangeur de chaleur 25 réalise un échange de chaleur entre l'eau de refroidissement du moteur du véhicule automobile et l'air de refroidissement.

Une troisième partie 25c de l'échangeur de chaleur 25, située à l'arrière de la première partie 25a et de la seconde partie 25b, assure l'échange de chaleur entre les gaz du moteur et de l'air du dispositif de climatisation du véhicule automobile.

Dans le cas d'un véhicule automobile selon l'art antérieur représenté sur la figure 8, la place disponible dans le compartiment moteur à l'avant du moteur 5 peut être entièrement réservée au radiateur 25 auquel peut être associé un ventilateur de tirage d'air renforçant l'effet de l'air atmosphérique 27.

Dans le cas d'un véhicule automobile suivant l'invention dans lequel le système de dépollution 9 est placé à l'intérieur du compartiment moteur à l'avant du moteur 5, il est possible de libérer de la place à l'avant du moteur en plaçant les éléments du radiateur 25 dans une disposition latérale de part et d'autre du moteur 5 et de la boîte de vitesses 5', comme représenté sur la figure 9.

Les éléments de radiateur peuvent être placés dans une direction longitudinale, l'un des radiateurs tels que le radiateur 25b d'échange entre l'eau de refroidissement du moteur et l'air de refroidissement étant placé par exemple à gauche et les deux autres éléments de radiateur 25a et 25c étant placés à droite. Dans ce cas, l'air de refroidissement 27 doit atteindre les radiateurs en position latérale.

Pour favoriser la circulation de l'air de refroidissement en direction des radiateurs en position latérale, il est préférable de prévoir un compartiment moteur parfaitement fermé à sa partie supérieure et à sa partie inférieure.

Le capot du véhicule automobile, qui peut être éventuellement redessiné pour assurer une très bonne circulation de l'air vers les radiateurs, assure la fermeture à la partie supérieure du compartiment moteur. On peut prévoir, à la partie inférieure du compartiment moteur 3, en-dessous du moteur 5, un plancher totalement plein pour assurer une fermeture sensiblement étanche à l'air du compartiment moteur 3 à sa partie inférieure.

Dans certains cas, il peut être nécessaire de prévoir des ventilateurs ou turbines de tirage de l'air 28 et 28', par exemple sur les faces extérieures des radiateurs, de manière à activer la circulation de l'air de refroidissement.

Ces turbines ou ventilateurs peuvent être entraînés par des moteurs électriques alimentés par la batterie du véhicule.

Cependant, pour éviter l'utilisation de moteurs électriques et un branchement sur la batterie du véhicule automobile, on peut assurer une circulation d'air par des turbines associées à des éléments rotatifs existant sur le véhicule automobile et disposés latéralement de part et d'autre des radiateurs 25b et 25a, 25c, dans des dispositions latérales selon l'invention.

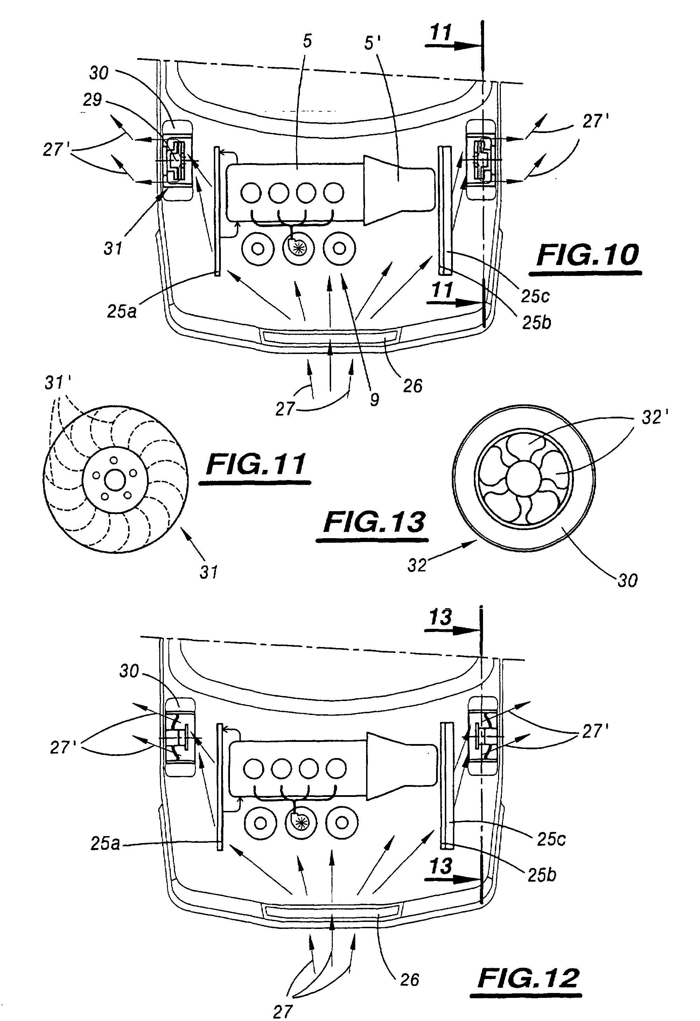

Dans le cas du mode de réalisation représenté sur les figures 10 et 11, on active la circulation de l'air à travers les échangeurs de chaleur 25a et 25b et 25c, respectivement, comme représenté par les flèches 27', en associant aux freins à disques 29 de chacune des roues avant 30 du véhicule, une turbine de circulation d'air 31.

Sur la figure 11, on a représenté la turbine 31 associée à une partie tournante du frein à disques 29, la turbine 31 étant constituée par des pales 31' fixées sur le frein à disques 29.

Comme représenté sur les figures 12 et 13, il est également possible d'assurer une circulation forcée d'air à travers les échangeurs de chaleur 25a et, respectivement, 25b et 25c, en fixant sur chacune des roues avant 30 du véhicule automobile, dans une disposition radiale entre le moyeu et la jante de la roue, une pluralité d'aubes ou ailettes 32' profilées constituant une turbine 32 d'activation de la circulation d'air.

Bien entendu, les dispositifs d'activation de la circulation d'air associés aux roues du véhicule automobile ont une action qui dépend de la vitesse de circulation du véhicule automobile.

Il peut rester nécessaire de prévoir des ventilateurs entraînés par des moteurs électriques alimentés par la batterie du véhicule automobile pour refroidir les différents fluides moteurs à basse vitesse de circulation.

La disposition latérale des échangeurs de chaleur peut être utilisée non seulement dans le cas des échanges de chaleur mentionnés ci-dessus mais encore dans le cas du refroidissement de l'huile moteur par de l'air de refroidissement.

Pour ménager à l'avant du moteur d'un véhicule automobile, à l'intérieur du compartiment moteur, une place suffisante pour loger l'ensemble du système de dépollution, il peut être nécessaire de prévoir certaines adaptations, indépendamment de la disposition latérale des radiateurs.

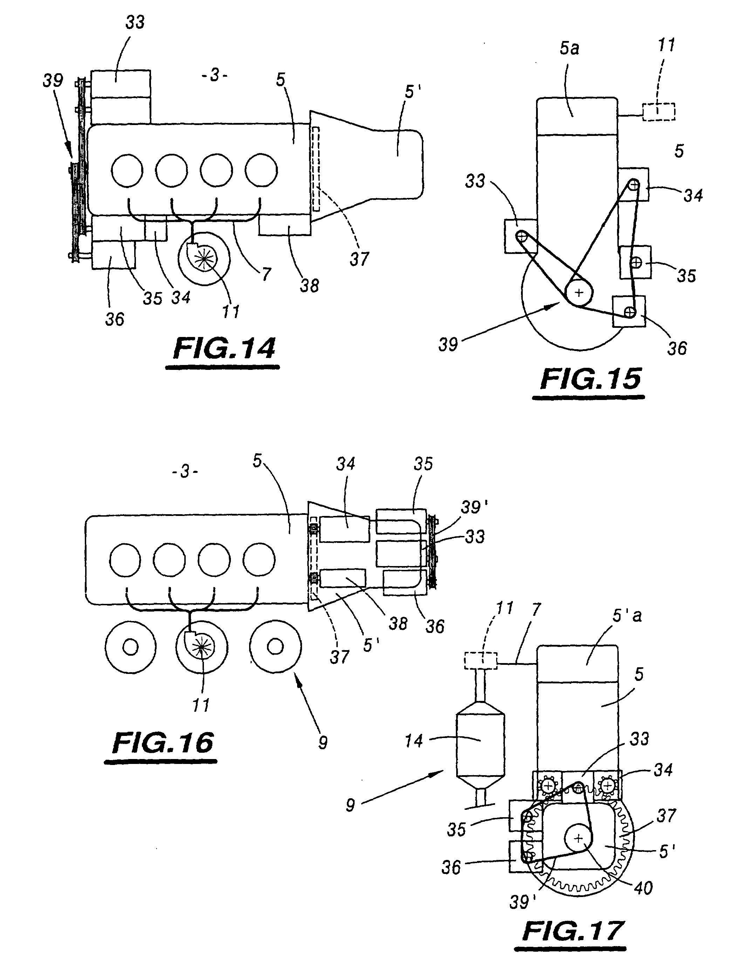

Sur les figures 14 et 15, on a représenté un moteur de type classique en L d'un véhicule automobile tel que construit actuellement.

Le moteur 5 à quatre cylindres en ligne comporte des tubulures d'échappement 7 reliées sur la face avant de la culasse 5a du moteur 5 à un turbocompresseur 11.

Sur les deux faces avant et arrière du moteur sont disposés différents organes tels que le compresseur 33 du dispositif de climatisation, la pompe à huile 35 de la direction assistée, l'alternateur 36 d'alimentation de la batterie et le démarreur 38 comportant un pignon d'entraînement engrenant avec le volant 37 du moteur.

De plus, dans le cas où le moteur 5 est un moteur Diesel, on doit prévoir une pompe d'injection sous haute pression du carburant Diesel 34.

Ces composants, à l'exception du démarreur sont entraînés en rotation par un ensemble de poulies et de courroies 39 solidaire en rotation du moteur 5.

En plus du fait qu'il occupe de la place dans le compartiment moteur à l'avant du moteur 5, cet ensemble de composants comporte des moyens d'entraînement à courroies de réalisation complexe.

Sur les figures 16 et 17, on a représenté un véhicule automobile suivant l'invention comportant, à l'intérieur du compartiment moteur 3, un système de dépollution 9 placé à l'avant du moteur 5.

Afin de libérer de la place à l'avant du moteur 5, dans le compartiment moteur 3, on place les composants qui ont été décrits précédemment autour de la boîte de vitesses 5' du véhicule automobile dans une disposition latérale sur la droite du moteur 5, à l'extrémité longitudinale de la ligne de cylindres du moteur.

Le démarreur 38 et la pompe d'injection à haute pression du carburant Diesel 34, dans le cas d'un moteur Diesel, sont placés au-dessus de la boîte de vitesse 5' du véhicule automobile et comportent des pignons de sortie ou d'entrée engrenant avec le volant 37 du moteur réalisé sous la forme d'une roue dentée.

Le compresseur du système de climatisation 33 peut également être placé au-dessus de la boîte de vitesses 5', la pompe à huile de la direction assistée 35 et l'alternateur 36 pouvant être placés, par exemple, latéralement par rapport à la boîte de vitesses 5'. Les composants 33, 35 et 36 comportent un arbre d'entrée sur lequel est fixée une poulie, une courroie d'entraînement commune 39' passant sur l'ensemble des poulies d'entraînement des composants et sur une poulie 40 calée sur un arbre de sortie de la boîte de vitesses.

La disposition des composants du moteur telle que représentée sur les figures 16 et 17 permet non seulement de ménager de la place dans le compartiment moteur 3 à l'avant du moteur 5 mais encore de rendre le moteur plus compact et donc plus facilement logeable sous le capot et de simplifier l'entraînement des composants en utilisant une courroie unique.

Le véhicule automobile suivant l'invention présente donc de nombreux avantages tant en ce qui concerne le fonctionnement et la logeabilité de la ligne d'échappement que la conception générale et la sécurité du véhicule automobile.

L'invention ne se limite pas aux modes de réalisation qui ont été décrits.

C'est ainsi que les perfectionnements représentés sur les figures 9 à 17 qui ont été représentés dans le cas d'un moteur en L ayant quatre cylindres en ligne peuvent être appliqués à d'autres types de moteur, par exemple un moteur en V à deux lignes de cylindres placées de façon transversale.

L'invention s'applique aussi bien dans le cas des moteurs à essence que dans le cas des moteurs Diesel, la constitution du système de dépollution pouvant être différente d'un type de moteur à l'autre.

De manière générale, l'invention s'applique à tout véhicule automobile entraîné par un moteur thermique.

## Revendications

1. Véhicule automobile comprenant un compartiment moteur (3) dans une partie avant du véhicule, un moteur thermique (5) disposé à l'intérieur du compartiment moteur (3), une ligne d'échappement (6) de gaz de combustion et des tubulures d'échappement (7, 7') assurant la liaison entre la sortie d'au moins un cylindre du moteur thermique (5) et la ligne d'échappement (6) qui comporte un conduit d'échappement (8) et au moins deux dispositifs de dépollution (14, 15, 16) d'un système de dépollution (9) intercalé sur le conduit d'échappement (8), **caractérisé par le fait que** tous les dispositifs de dépollution (14, 15, 16) du système de dépollution (9) de la ligne d'échappement (6) sont placés dans le compartiment moteur (3), à l'avant du moteur thermique (5), et que le conduit d'échappement (8) sur lequel est placé le système de dépollution (9) à l'intérieur du compartiment moteur (3) comporte une partie à l'aval du système de dépollution (9) placée dans une direction longitudinale du véhicule automobile, dans une position latérale, en-dessous du plancher (4) de l'habitacle du véhicule automobile réalisé sous forme totalement plate.

2. Véhicule automobile suivant la revendication 1, **caractérisé par le fait qu'**un silencieux (10) de la ligne d'échappement (6) est également placé dans le compartiment moteur (3), à l'avant du moteur thermique (5).

3. Véhicule automobile suivant l'une quelconque des revendications 1 et 2, **caractérisé par le fait que**, sur la partie aval de direction longitudinale à disposition latérale par rapport au véhicule (1) du conduit d'échappement (8), est disposé au moins un pot d'échappement ou silencieux (10', 10"), en-dessous du plancher du véhicule, dans une partie du véhicule située à l'arrière de l'habitacle (4).

4. Véhicule automobile suivant l'une quelconque des revendications 1 à 3, **caractérisé par le fait que** les dispositifs de dépollution (14, 15, 16) du système de dépollution (9) présentent une forme générale cylindrique et sont disposés dans le compartiment moteur (3) du véhicule automobile, avec leur axe dans la direction verticale.

5. Véhicule automobile suivant la revendication 2, **caractérisé par le fait que** le premier silencieux (10) de forme cylindrique est placé dans le compartiment moteur (3) du véhicule automobile avec son axe horizontal et en-dessous du système de dépollution (9).

6. Véhicule automobile suivant l'une quelconque des revendications 1 à 5, dans le cas où le moteur thermique (5) est un moteur en L ayant une ligne de cylindres transversale, **caractérisé par le fait que** la ligne d'échappement (6) est reliée aux cylindres de la ligne de cylindres du moteur (5), par des tubulures d'échappement (7) dirigées vers l'avant du moteur (5).

7. Véhicule automobile suivant l'une quelconque des revendications 1 à 5, dans le cas où le moteur thermique (5) est un moteur en L à une ligne de cylindres, **caractérisé par le fait que** les cylindres de la ligne de cylindres du moteur thermique (5) sont reliés à la ligne d'échappement (6) par l'intermédiaire de tubulures (7) dirigées vers l'arrière du moteur et d'une conduite de raccordement (12) passant de l'arrière vers l'avant du moteur thermique (5), par le dessus du moteur.

8. Véhicule automobile suivant l'une quelconque des revendications 1 à 5, dans le cas où le moteur thermique (5) est un moteur en V à deux lignes de cylindres de direction transversale, **caractérisé par le fait que** la ligne d'échappement (6) est reliée aux cylindres des lignes de cylindres du moteur, par un premier ensemble de tubulures d'échappement (7) dirigées vers l'avant du moteur (5), par un second ensemble de tubulures d'échappement (7') dirigées vers l'arrière du moteur thermique (5) et par au moins une conduite d'échappement de raccordement (22, 23) joignant l'ensemble de tubulures d'échappement (7') dirigées vers l'arrière du moteur (5) à l'ensemble de tubulures (7) dirigées vers l'avant du véhicule automobile et à la ligne d'échappement (6).

9. Véhicule automobile suivant l'une quelconque des revendications 6 à 8, **caractérisé par le fait que** les tubulures d'échappement (7, 7') sont reliées à la ligne d'échappement (6), par l'intermédiaire d'au moins une turbine d'au moins un turbocompresseur (11, 11') du moteur thermique (5).

10. Véhicule automobile suivant l'une quelconque des revendications 1 à 9, **caractérisé par le fait que** le système de dépollution (9) comporte au moins un catalyseur de pré-oxydation (14, 14'), un filtre à particules (15) et un piège à NOx (16) disposés en série et dans cet ordre sur la ligne d'échappement (6) et l'un à la suite de l'autre dans une direction transversale du véhicule automobile à l'intérieur du compartiment moteur, à l'avant du moteur thermique (5).

11. Véhicule automobile suivant l'une quelconque des revendications 1 à 10, **caractérisé par le fait qu'**il comporte, à l'intérieur du compartiment moteur (3), au moins un radiateur (25a, 25b, 25c) disposé dans une direction longitudinale du véhicule automobile et dans une partie latérale du compartiment moteur (3), d'un côté du moteur thermique (5).

12. Véhicule automobile suivant la revendication 11, **caractérisé par le fait qu'**il comporte, sur l'un au moins des freins à disques (29) d'au moins une roue avant (30) du véhicule automobile (1), une turbine (31) de tirage d'air constituée par des ailettes (31') fixées sur une partie tournante du frein à disques (29), de manière à activer la circulation de l'air (27') à travers l'au moins un radiateur (25a, 25b, 25c) disposé latéralement.

13. Véhicule automobile suivant la revendication 11, **caractérisé par le fait que** l'une au moins des roues avant (30) du véhicule automobile comporte une turbine (32) constituée par des ailettes (32') fixées dans une disposition radiale entre le moyeu et la jante de la roue (30), de manière à activer une circulation d'air (27') à travers l'au moins un radiateur (25a, 25b, 25c).

14. Véhicule automobile suivant l'une quelconque des revendications 1 à 13, comportant un moteur thermique (5) disposé transversalement dans le compartiment moteur (3) du véhicule automobile et une boîte de vitesses (5') disposée latéralement dans le compartiment moteur (3) à une extrémité longitudinale du moteur (5), **caractérisé par le fait qu'**il comporte un ensemble de composants (33, 34, 35, 36, 38) placés à la périphérie de la boîte de vitesses (5'), de manière à laisser totalement libre un espace à l'avant du moteur thermique (5) dans le compartiment moteur (3) pour loger le système de dépollution (9) de la ligne d'échappement (6).

15. Véhicule automobile suivant la revendication 14, **caractérisé par le fait qu'**une partie au moins des composants (34, 38) du moteur (5) est entraînée en rotation par l'intermédiaire de pignons engrenant avec un volant (37) du moteur thermique (5) et que les autres composants (33, 35, 36) comportent des poulies d'entraînement en rotation par une courroie (39') entraînée par une poulie (40) solidaire d'un arbre de sortie de la boîte de vitesses (5').

16. Véhicule automobile suivant l'une quelconque des revendications 14 et 15, **caractérisé par le fait que** les composants du moteur thermique (5) du véhicule automobile (1) disposés autour de la boîte de vitesses comportent au moins l'un des composants suivants : compresseur du système de climatisation (33), pompe d'injection à haute pression d'un carburant Diesel (34), pompe à huile du système de direction assistée (35), alternateur (36), démarreur électrique (38).

## Patentansprüche

1. Kraftfahrzeug mit einem Motorabteil (3) in einem vorderen Teil des Fahrzeugs, einem Verbrennungsmotor (5), der in dem Motorabteil (3) angeordnet ist, einem Abgasstrang (6) für die Verbrennungsgase und Auspuffrohren (7, 7'), welche für die Verbindung zwischen dem Auslaß von mindestens einem Zylinders des Verbrennungsmotors (5) und dem Abgasstrang (6) sorgt, welcher ein Auspuffrohr (8) und mindestens zwei Reinigungsvorrichtungen (14, 15, 16) eines Reinigungssystems (9) enthält, welche auf dem Auspuffrohr (8) angeordnet sind,
**dadurch gekennzeichnet, dass**
alle Reinigungsvorrichtungen (14, 15, 16) des Reinigungssystems (9) des Abgasstrangs (6) in dem Motorabteil (3) an der Vorderseite des Verbrennungsmotors (5) angeordnet sind, und dass das Auspuffrohr (8), auf dem das Reinigungssystem (9) im Inneren des Motorabteils (3) angeordnet ist, einen unteren Teil des Reinigungssystems (9) enthält, der in der Längsrichtung des Kraftfahrzeuges in einer seitlichen Position unter dem Boden (4) des Fahrgastraumes des Kraftfahrzeuges verläuft und eine absolut ebene Form hat.

2. Kraftfahrzeug nach Anspruch 1,
**dadurch gekennzeichnet, dass**
ein Schalldämpfer (10) des Abgasstrangs (6) ebenfalls in dem Motorabteil (3) vor dem Verbrennungsmotor (5) angeordnet ist.

3. Kraftfahrzeug nach einem der Ansprüche 1 und 2,
**dadurch gekennzeichnet, dass**
an der Unterseite in der Längsrichtung seitlich gegenüber dem Kraftfahrzeug (1) des Abgasstrangs (8) mindestens ein Auspufftopf oder Schalldämpfer (10', 10") unter dem Boden des Kraftfahrzeugs in einem Teil des Kraftfahrzeugs an der Rückseite des Fahrgastraums (4) angeordnet ist.

4. Kraftfahrzeug nach einem der Ansprüche 1 bis 3,
**dadurch gekennzeichnet, dass**
die Reinigungsvorrichtungen (14, 15, 16) des Reinigungssystems (9) eine allgemein zylindrische Form haben und in dem Motorabteil (3) des Kraftfahrzeugs angeordnet sind, wobei ihre Achse in der vertikalen Richtung verläuft.

5. Kraftfahrzeug nach Anspruch 2,
**dadurch gekennzeichnet, dass**
der erste zylindrische Schalldämpfer (10) in dem Motorabteil (3) des Kraftfahrzeugs so angeordnet ist, dass seine Achse horizontal verläuft und unter dem Reinigungssystem (9) angeordnet ist.

6. Kraftfahrzeug nach einem der Ansprüche 1 bis 5, bei dem der Verbrennungsmotor ein L-förmiger Motor mit einer quer verlaufenden Zylinderreihe ist,
**dadurch gekennzeichnet, dass**
der Abgasstrang (6) mit den reihenförmig angeordneten Zylindern des Motors (5) mit Hilfe von Abgasrohren (7) verbunden ist, die gegen die Vorderseite des Motors (5) gerichtet sind.

7. Kraftfahrzeug nach einem der Ansprüche 1 bis 5, bei dem der Verbrennungsmotor (5) ein L-förmiger Motor mit einer Zylinderreihe ist,
**dadurch gekennzeichnet, dass**
die Zylinder der Zylinderreihe des Verbrennungsmotors (5) an einen Abgasstrang (6) mit Hilfe von Rohrstutzen (7), die gegen die Rückseite des Motors gerichtet sind, und einer Anschlussleitung (12) angeschlossen sind, die über dem Motor von der Rückseite zur Vorderseite des Verbrennungsmotors (5) verläuft.

8. Kraftfahrzeug nach einem der Ansprüche 1 bis 5, bei dem der Verbrennungsmotor (5) ein V-förmiger Motor mit zwei quer liegenden Zylinderreihen ist,
**dadurch gekennzeichnet, dass**
der Abgasstrang (6) an die Zylinder der Zylinderreihe des Motors mit Hilfe eines ersten Zusammenbaus aus gegen die Vorderseite des Motors (5) gerichteten Abgasrohren (7), einem zweiten gegen die Rückseite des Verbrennungsmotors (5) gerichteten Zusammenbau aus Abgasrohren (7') und mindestens einem Anschlussabgasrohr (22, 23) angeschlossen ist, mit dessen Hilfe der Zusammenbau aus gegen die Rückseite des Motors (5) gerichteten Abgasrohren (7'), die gegen die Vorderseite des Motors (5) gerichtet sind, mit dem Rohrzusammenbau (7) und dem Abgasstrang (6) verbunden wird.

9. Kraftfahrzeug nach einem der Ansprüche 6 bis 8,
**dadurch gekennzeichnet, dass**
die Abgasrohre (7, 7') an einen Abgasstrang (6) mit Hilfe von mindestens einer Turbine mindestens eines Turbokompressors (11, 11') des Verbrennungsmotors (5) angeschlossen sind.

10. Kraftfahrzeug nach einem der Ansprüche 1 bis 9,
**dadurch gekennzeichnet, dass**
das Reinigungssystem (9) mindestens einen Katalysator für die Voroxydation (14, 14'), einen Partikelfilter (15) und eine NOx-Falle (16) enthält, die reihenweise und in dieser Reihenfolge auf dem Abgasstrang (6) nacheinander in seitlicher Richtung des Kraftfahrzeuges im Inneren des Motorabteils an der Vorderseite des Verbrennungsmotors (5) angeordnet sind.

11. Kraftfahrzeug nach einem der Ansprüche 1 bis 10,
**dadurch gekennzeichnet, dass**
es im Inneren des Motorabteils (3) mindestens einen Radiator (25a, 25b, 25c) enthält, der in der Längsrichtung des Kraftfahrzeuges und in einem seitlichen Teil des Motorabteils (3) auf der einen Seite des Verbrennungsmotors (5) angeordnet ist.

12. Kraftfahrzeug nach Anspruch 11,
**dadurch gekennzeichnet, dass**
es auf mindestens einer der Scheibenbremsen (29) mindestens eines Vorderrades (30) des Kraftfahrzeuges (1) eine Turbine (31) für die Ansaugung von Luft enthält, die aus Schaufeln (31') besteht, die auf einem drehenden Teil der Scheibenbremse (29) so angeordnet sind, dass sie die Zirkulierung von Luft (27') durch mindestens einen seitlich angeordneten Radiator (25a, 25b, 25c) aktivieren.

13. Kraftfahrzeug nach Anspruch 11,
**dadurch gekennzeichnet, dass**
mindestens eines der Vorderräder (30) des Kraftfahrzeuges eine Turbine (32) enthält, die aus Schaufeln (32') besteht, die in radialer Richtung zwischen der Nabe und der Felge des Rades (30) so angeordnet sind, dass sie die Zirkulierung von Luft (27') durch mindestens einen der seitlich angeordneten Radiatoren (25a, 25b, 25c) aktivieren.

14. Kraftfahrzeug nach einem der Ansprüche 1 bis 13, das einen quer in dem Motorabteil (3) des Kraftfahrzeuges angeordneten Verbrennungsmotor (5) und ein seitlich in dem Motorabteil (3) an einem Längsende des Motors (5) angeordnetes Getriebe enthält,
**dadurch gekennzeichnet, dass**
es einen Zusammenbau aus Komponenten (33, 34, 35, 36, 38) enthält, die am Umfang des Getriebes (5') so angeordnet sind, dass sie einen absolut freien Raum an der Vorderseite des Verbrennungsmotors (5) in dem Motorabteil (3) bilden, um das Reinigungssystem (9) des Abgasstrangs (6) aufzunehmen.

15. Kraftfahrzeug nach Anspruch 14,
**dadurch gekennzeichnet, dass**
mindestens ein Teil der Komponenten (34, 38) des Motors (5) mit Hilfe von Ritzeln drehend angetrieben werden, die mit einem Schwungrad (37) des Verbrennungsmotors (5) in Eingriff treten, und dass die anderen Komponenten (33, 35, 36) Riemenscheiben enthalten, welche mit Hilfe eines Riemens (39') gedreht werden, der mit Hilfe einer Riemenscheibe (40) angetrieben wird, die mit dem Ausgang einer Abtriebswelle des Getriebes (5') fest verbunden sind.

16. Kraftfahrzeug nach einem der Ansprüche 14 und 15,
**dadurch gekennzeichnet, dass**
die Komponenten des Verbrennungsmotors (5) des Kraftfahrzeuges (1), die am Umfang des Getriebes angeordnet sind, mindestens eine der folgenden Komponenten umfassen: einen Kompressor des Systems für die Klimatisierung (33), eine Hochdruckeinspritzpumpe für einen Dieselkraftstoff (34), eine Ölpumpe für die Servolenkung (35), einen Wechselstromgenerator (36), und einen elektrischen Anlasser (38).

## Claims

1. Motor vehicle comprising an engine compartment (3) in a front part of the vehicle, a thermal engine (5) disposed inside the engine compartment (3), an exhaust system (6) for combustion gases and exhaust outlets (7, 7') forming the connection between the outlet of at least one cylinder of the thermal engine (5) and the exhaust system (6), which comprises an exhaust pipe (8) and at least two emission control devices (14, 15, 16) of a emission control system (9) positioned on the exhaust pipe (8), **characterised in that** the emission control devices (14, 15, 16) of the emission control device (9) of the exhaust system (6) are positioned in the engine compartment (3) forward of the thermal engine (5), and that the exhaust pipe (8), on which the emission control system (9) is positioned inside the engine compartment (3) comprises a section downstream of the emission control system (9) positioned in a longitudinal direction of the motor vehicle, in a lateral position below the floor (4) of the passenger compartment of the motor vehicle formed in a completely flat configuration.

2. Motor vehicle according to Claim 1, **characterised in that** a silencer (10) of the exhaust system (6) is likewise positioned in the engine compartment (3) forward of the thermal engine (5).

3. Motor vehicle according to any one of Claims 1 and 2, **characterised in that** on the downstream section of the exhaust pipe (8) in longitudinal direction arranged laterally in relation to the vehicle (1), at least one exhaust or silencer cylinder (10', 10") is disposed below the floor of the vehicle in a section of the vehicle located to the rear of the passenger compartment (4).

4. Motor vehicle according to any one of Claims 1 to 3, **characterised in that** the emission control devices (14, 15, 16) of the emission control system (9) have a generally cylindrical form and are disposed in the engine compartment (3) of the motor vehicle with their axis in the vertical direction.

5. Motor vehicle according to Claim 2, **characterised in that** the first cylindrical silencer (10) is positioned in the engine compartment (3) of the motor vehicle with its horizontal axis and below the emission control system (9).

6. Motor vehicle according to any one of Claims 1 to 5, wherein the thermal engine (5) is an L-shaped engine having a transverse array of cylinders, **characterised in that** the exhaust system (6) is connected to the cylinders of the array of cylinders of the engine (5) by exhaust outlets (7) directed towards the front of the engine (5).

7. Motor vehicle according to any one of Claims 1 to 5, wherein the thermal engine (5) is an L-shaped engine with an array of cylinders, **characterised in that** the cylinders of the array of cylinders of the thermal engine (5) are connected to the exhaust system (6) by means of exhaust outlets (7) directed towards the rear of the engine and a connector pipe (12) extending from the rear towards the front of the thermal engine (5) over the top of the engine.

8. Motor vehicle according to any one of Claims 1 to 5, wherein the thermal engine (5) is a V-shaped engine with two transversely directed arrays of cylinders, **characterised in that** the exhaust system (6) is connected to the cylinders of the array of cylinders of the engine by a first assembly of exhaust outlets (7) directed towards the front of the engine (5), by a second assembly of exhaust outlets (7') directed towards the rear of the thermal engine (5) and by at least one connector exhaust pipe (22, 23) joining the assembly of exhaust outlets (7') directed towards the rear of the engine (5) to the assembly of exhaust outlets (7) directed towards the front of the motor vehicle and to the exhaust system (6).

9. Motor vehicle according to any one of Claims 6 to 8, **characterised in that** the exhaust outlets (7, 7') are connected to the exhaust system (6) by means of at least one turbine of at least one turbo-compressor (11, 11') of the thermal engine (5).

10. Motor vehicle according to any one of Claims 1 to 9, **characterised in that** the emission control system (9) has at least one pre-oxidation catalyst (14, 14'), a particle filter (15) and a NOx trap (16) disposed in series and in this sequence on the exhaust system (6) and one behind the other in a transverse direction of the motor vehicle inside the engine compartment forward of the thermal engine (5).

11. Motor vehicle according to any one of Claims 1 to 10, **characterised in that** inside the engine compartment (3) it comprises at least one radiator (25a, 25b, 25c) disposed in a longitudinal direction of the motor vehicle and in a lateral section of the engine compartment (3) on one side of the thermal engine (5).

12. Motor vehicle according to Claim 11, **characterised in that** on at least one of the disc brakes (29) of at least one front wheel (30) of the motor vehicle (1), it comprises an air venting turbine (31) formed by fins (31') fastened to a rotating part of the disc brake (29) in order to activate the circulation of air (27') across at least one radiator (25a, 25b, 25c) disposed laterally.

13. Motor vehicle according to Claim11, **characterised in that** at least one of the front wheels (30) of the motor vehicle has a turbine (32) formed by fins (32') fastened in a radial position between the hub and the rim of the wheel (30) in order to activate a circulation of air (27') across at least one radiator (25a, 25b, 25c).

14. Motor vehicle according to any one of Claims 1 to 13, comprising a thermal engine (5) disposed transversely in the engine compartment (3) of the motor vehicle and a gearbox (5') disposed laterally in the engine compartment (3) at a longitudinal end of the engine (5), **characterised in that** it comprises an assembly of components (33, 34, 35, 36, 38) positioned on the periphery of the gearbox (5') in order to leave a space forward of the thermal engine (5) in the engine compartment (3) totally free to house the emission control system (9) of the exhaust system (6).

15. Motor vehicle according to Claim 14, **characterised in that** at least a part of the components (34, 38) of the engine (5) is set in rotation by means of pinions engaging with a flywheel (37) of the thermal engine (5), and that the other components (33, 35, 36) comprise pulleys caused to rotate by a belt (39') driven by an integral pulley (40) of an output shaft of the gearbox (5').

16. Motor vehicle according to any one of Claims 14 to 15, **characterised in that** the components of the thermal engine (5) of the motor vehicle (1) disposed around the gearbox comprise at least one of the following components: compressor of the air-conditioning system (33), high-pressure diesel fuel injection pump (34), oil pump for the power steering system (35), alternator (36), ignition switch (38).
